# EUROPÄISCHE PATENTANMELDUNG

(11) **EP 1 134 582 A2**
(43) Veröffentlichungstag der Anmeldung: **19.09.2001**
(21) Anmeldenummer: 01105751.0
(22) Anmeldetag: 08.03.2001
(51) Int. Cl.: G01N 33/00, G01N 21/31, G01N 21/03

(54) **Gasanalysatoreinrichtung sowie Verfahren zum Betrieb derselben**

(30) Priorität: 17.03.2000 DE 10013374
(71) Anmelder: ABB PATENT GmbH, 68309 Mannheim (DE)
(72) Erfinder: Fabinski, Walter, Dipl.-Ing., 65830 Kriftel (DE); Schastok, Peter, 61138 Niederdorfelden (DE); Thies, Werner, Dipl.-Ing., 65520 Bad Camberg (DE)
(74) Vertreter: Schmidt, Karl Michael, Dipl.-Phys.

(57) **Zusammenfassung**

Die Erfindung betrifft eine Gasanalysatoreinrichtung mit einer Analyse- oder Sensoreinheit sowie mit einer elektrisch elektronischen Verarbeitungseinheit, sowie ein Verfahren zum Betrieb einer solchen Gasanalysatoreinrichtung gemäß Oberbegriff der Patentansprüche 1 und 13. Um zu erreichen daß sowohl der Umgang mit korrosiven und/oder brennbaren und/oder toxischen Gasen in einem nicht explosionsgefährdetem Bereich (Ex-freien Bereich) als auch bei Betrieb einer solchen Einrichtung in einem Ex-Bereich deutlich besser abgesichert wird, ist erfindungsgemäß vorgeschlagen, dass bei der Analyse eines toxischen und/oder korrosiven und/oder brennbaren Gases die Analyse- oder Sensoreinheit (20) als solches nicht zündfähig ausgestaltet und in einer gasdichten Kammer (1, 30) angeordnet ist, um welche eine zweite Kammer (2, 3, 40) angeordnet ist.

## Beschreibung

Die Erfindung betrifft eine Gasanalysatoreinrichtung mit einer Analyse- oder Sensoreinheit sowie mit einer elektrisch elektronischen Verarbeitungseinheit, sowie ein Verfahren zum Betrieb einer solchen Gasanalysatoreinrichtung gemäß Oberbegriff der Patentansprüche 1 und 13.

Gasanalysatoreinrichtungen dieser Art sind vielfach bekannt sowie auch Betriebsverfahren derselben. Dabei werden Gassensoren verwendet, die je nach Ausgestaltung auf die einen oder anderen Gase, je nachdem welches zur selektiven Messung gewünscht ist, sensitiv eingestellt sind. Hierzu sind elektronische Sensorsysteme, Gelsensoren, Wärmeleitsensoren und dergleichen mehr bekannt. Auch Festelektrolytsensoren insbesondere zur Sauerstoffanalyse sind bekannt.

Überdies sind jedoch auch optische Gasanalyseverfahren bekannt, bei welchen ausgehend von einer Lichtquelle spezifischer Strahlungsbanden eine von Meßgas durchströmte Küvette durchstrahlt wird. Auf der der Lichtquelle gegenüberliegenden Seite der Küvette ist ein Detektor angeordnet, welcher basierend auf einem optopneumatischen Effekt ein Meßsignal aufnimmt. Der Detektor ist auf die zu messende Messgaskomponente sensitiv eingestellt und mißt das nach Durchlauf durch die Küvette absorptionsmäßig verbliebene Restsignal. Dieses ist antiproportional zum Partialdruckanteil der Messgaskomponente in der vermessenen Gasprobe. Wegen dieses antiproportionalen Zusammenhanges handelt es sich dabei auch um sogenannte Absorptionsspektroskopie.

Im allgemeinen werden solche Verfahren als Absorptionsfotometer mit entsprechenden Lichtquellen eingesetzt.

Beim Einsatz in der Prozessmesstechnik, also in der Onlinemessung industrieller Prozessabläufe werden zumeist Gasproben entnommen, die über den Analysator geführt werden. Für den Fall, dass es sich um toxische oder brennbare Gase handelt, sind Vorkehrungen zum Explosionsschutz zu treffen.

In der chemischen Verfahrenstechnik müssen jedoch häufig Meßaufgaben gelöst werden, bei denen ein oder mehrere Gaskomponenten in korrosiven und/oder toxischen und/oder brennbaren Gasen zu analysieren sind. In der Regel besitzt die heute angebotene extraktive Meßtechnik spezielle Eigenschaften, um den Forderungen der Meßtechnik und Sicherheit zu entsprechen. Dazu werden auf aufwendige Art und Weise Spezialisten für den Einsatz im explosionsgefährdeten Bereich (Ex-Bereich) und beim Einsatz in korrosiven und toxischen Gasen mit zu überwachender Gehäusespülung (Überdruckkapselung) und druckfester Kapselung eingesetzt. Häufig kommt es vor, daß eine Teilschädigung bereits eintritt, bevor das Servicepersonal einschreiten kann.

Der Erfindung liegt somit die Aufgabe zugrunde, eine Gasanalysatoreinrichtung sowie ein Verfahren zum Betrieb einer solchen dahingehend zu verbessern, daß sowohl der Umgang mit korrosiven und/oder brennbaren und/oder toxischen Gasen in einem nicht explosionsgefährdetem Bereich (Ex-freien Bereich) als auch bei Betrieb einer solchen Einrichtung in einem Ex-Bereich deutlich besser abgesichert wird.

Die gestellte Aufgabe wir bei einer Gasanalysatoreinrichtung der gattungsgemäßen Art erfindungsgemäß durch die kennzeichnenden Merkmale des Patentanspruches 1 gelöst.

Vorteilhafte Ausgestaltungen der erfindungsgemäßen Gasanalysatoreinrichtungen sind in den abhängigen Ansprüchen 2 bis 12 angegeben.

Hinsichtlich eines Verfahrens zum Betrieb einer solchen Gasanalysatoreinrichtung ist die gestellte Aufgabe erfindungsgemäß durch die kennzeichnenden Merkmale des Patentanspruches 13 gelöst.

Weitere vorteilhafte Ausgestaltungen des erfindungsgemäßen Verfahrens sind in den übrigen abhängigen Verfahrensansprüchen angegeben.

Die erfindungsgemäße Lösung berücksichtigt dabei sowohl bei der Gasanalysatoreinrichtung als auch beim Betriebsverfahren sowohl den Fall, daß brennbare Gase im Ex-freien Bereich analysiert werden sollen, als auch den zweiten Fall, daß das brennbare Gas in einem Ex-Bereich, vorhanden ist. Im zweitgenannten Fall müssen entsprechende Ausgestaltungen, wie nachfolgend beschrieben, hinzukommen.

Ebenfalls zu unterscheiden sind die eingangs im Stand der Technik schon beschriebenen Gasanalysatorgruppen. Zum einen die Gruppe der optischen Gasanalysatoreinrichtungen und andere wie z.B. die Gruppe der Wärmeleitsensoren und Festelektrolyt- oder Gelsensoren.

Der zweitgenannte Fall entspricht inhaltlich einer Gasanalysatoreinrichtung gemäß Anspruch 1. Dort besteht der Kern der Erfindung darin, daß bei Analyse eines toxischen und/oder korrosiven und/oder brennbaren Gases die Analyse- oder Sensoreinheit als solches nicht zündfähigen (z.B. eigensicher) ausgestaltet und in einer gasdichten Kammer angeordnet ist, um welche eine zweite Kammer angeordnet ist. In diesem Falle handelt es sich um einen Gasanalysator mit integrierter Sensoreinheit und integrierter Verarbeitungseinheit. Diese sind jedoch in einem gemeinsamen Gehäuse in getrennten Partien desselben angeordnet. Entsprechend ist der innerhalb des Gehäuses angeordnete Sensorbereich mit einem nicht zündfähigen Sensor versehen, der in einer ersten Kammer angeordnet ist, wobei dann die zweite Kammer um diese erste Kammer herum angeordnet ist, und somit zwischen erster, den Sensor enthaltenen Kammer und dem übrigen Raum, in dem die Elektronik angeordnet ist, plaziert ist. Somit ergibt sich eine entsprechend Ex-geschützte Trennung zwischen Sensorkammer und Elektronik. Werden nun toxische oder brennbare oder korrosive Gase dem Sensor zugeführt, so verbleiben diese grundsätzlich innerhalb der ersten, den Sensor enthaltenden Kammer. Zur Sicherheit schirmt die zweite um die erste Kammer herum angeordnete Kammer dieselbe wiederum ab. In entsprechender Ausgestaltung bei dieser Gerätevariante ist vorgesehen, daß die zweite Kammer mit einem Inertgas oder mit Luft gespült wird. Käme es in diesem Falle durch die erste Kammer zu einem Leck, so würde über diese Leckage toxisches oder korrosive oder brennbare Messgas lediglich in die zweite Kammer einströmen, die wiederum permanent von einem inerten Gas gespült wird. Hierdurch erfolgt wiederum ein Entsorgen des Leckagegases in ein geschlossenes Spülgassystem, wodurch gleichzeitig durch die Spülung das Leckagegas erheblich verdünnt wird. In erfindungsgemäßer Weise wird somit nicht nur gegen die Leckage gearbeitet, sondern die Leckage bzw. das durch die Leckage austretende gefährliche Gas kann bis zur Unbedenklichkeit verdünnt und somit entschärft werden.

In einem zweiten unabhängigen Einrichtungsanspruch ist die entsprechend gleiche Methodik auf eine Analyseeinrichtung angewendet, die auf einem optischen Detektionsverfahren wie beispielsweise auf der Absorptionsfotometrie basiert. Hierbei ist das Element entsprechenden Augenmerks die Küvette. Die Küvette enthält einen Messgaseintritt und einen Messgasaustritt. Das heißt, es besteht kein Gaskontakt zum Detektor als solches und die Küvette bleibt ein abgeschlossenes System. Um nunmehr die Ex-Schutzvoraussetzungen in erfindungsgemäßer Weise zu erfüllen, ist die besagte Küvette von einem zweiten Raum entweder partiell oder vollständig umgeben. Innerhalb dieses zweiten Raumes oder der zweiten Kammer, wenn man die Küvette als erste Kammer definiert, wird ein Spülgas zugeführt und entsprechend wieder abgeführt. Das verwendete Spülgas muß hierbei eine zweifache Voraussetzung erfüllen. Zum ersten muß das Spülgas inert sein oder zumindest im wesentlichen solche Eigenschaften aufweisen, und zum anderen darf es keine nennenswerte Absorption derjenigen Strahlungsbande bewirken, die sensitiv auf das Messgas gerichtet ist. Die allgemeine Absorption, die durch die Mehrzahl der nun auftretenden Fenster auftritt, kann durch zuvorige Eichung oder durch Kalibrierung berücksichtigt werden. Darüber hinausgehend ist es natürlich auch möglich, durch eine entsprechende Kalibrierung auch absorptives Spülgas mit zu berücksichtigen.

Für den Fall einer Leckage und für den Ex-Schutz als solches gilt das gleiche wie zur erstgenannten Ausführungsform. Kommt es im kritischen, das toxische oder korrosive oder brennbare Messgas führenden Bereich, nämlich der Küvette, zu einer Leckage, so tritt das Leckagegas lediglich in den zweiten, die Messküvette umgebenden Raum ein. Da dieser Raum bzw. diese Kammer zudem mittels Spülgas permanent gespült wird, kommt es, wie im erstgenannten Beispiel zu einer steten Verdünnung des kritischen Gases. Ebenso wird das kritische Gas aus der Anlage heraus, und möglicherweise aus dem Ex-Bereich herausgeführt.

Für beide Varianten gilt, wie bereits erwähnt, daß die zweite Kammer mit inertem Gas oder mit Luft gespült wird.

Weiterhin ist erfindungsgemäß sowohl für die erste als auch für die zweite Variante vorteilhaft ausgestaltet, daß in der besagten zweiten Kammer ein gegenüber der ersten Kammer höherer Druck eingestellt wird. Dadurch entsteht auch eine gasdynamische Abgrenzung gegenüber möglicherweise aus der ersten Kammer austretendem Gas.

Des weiteren ist vorteilhaft für sowohl die erste als auch die zweite Variante ausgestaltet, daß zur Spülgasüberwachung ein Flowsensor eingesetzt wird. Mittels dieses Sensors kann der Spülgasfluss überwacht werden, und gegebenenfalls nachgeschaltete sensitive Warnsensoren können kritische Gaszusammensetzungen erkennen, die wiederum regelnd auf den Spülgasfluss einwirken können.

Beide bisher genannten Beispiele betreffen im wesentlichen den Einsatz eines brennbaren (gelegentlich explosionsfähigen) Gases im Ex-freien Bereich. Das heißt, der Ex-Bereich existiert nur innerhalb der Analysatoreinrichtung und wird mit entsprechenden Maßnahmen von den elektrischen Systemen ferngehalten.

Ein zweites Einsatzgebiet ergibt sich jedoch durch den Einsatz im sogenannten Ex-Bereich. Um solche Einrichtungen auch dafür tauglich zu machen, sind die Einrichtungen als solches zusätzlich insgesamt im äußeren Bereich durch sekundäre Ex-Schutzmassnahmen geschützt (z.B. Überdruckkapselung, druckfeste Kapselung).

Wichtig ist es jedoch hierbei anzumerken, daß sich die Erfindung im wesentlichen zunächst auf die Verwendung toxischer oder korrosiver oder brennbarer Gase richtet, die dem Analysator zugeführt werden, zunächst unabhängig davon, ob die Umgebung im explosionsgefährdeten oder nicht explosionsgefährdeten Bereich ist. Im zweit genannten Fall handelt es sich um die Behandlung von toxischen oder korrosiven oder brennbaren Gasen innerhalb der Analysatoreinrichtung, wobei dieselbe wiederum auch in einem Ex-Bereich angeordnet ist.

Bezüglich eines Verfahrens zum Betrieb einer solchen Gasanalysatoreinrichtung ist erfindungsgemäß vorgesehen, daß bei Analyse eines toxischen oder korrosiven oder brennbaren Gases ein um die Analyse- oder Sensoreinheit herum angeordneter Raum von einem Spülgas um- bzw. durchströmt wird, wobei im gespülten Raum gegenüber dem Analysegasraum ein Überdruck eingestellt wird. Hierdurch werden aus sicherheitstechnischen Gründen entsprechende Druckradienten eingestellt, die ein Austreten von Leckagegas in den Spülgasweg und somit in die Umgebung sicher verhindern.

Weiterhin ist vorteilhaft ausgestaltet, daß die Spülung über eine Regelung erfolgt, indem Anteile von toxischen oder korrosiven oder brennbaren Gasanteilen im Spülgas von einem Sensor erfaßt und daraufhin der Spülgasdurchsatz geregelt erhöht werden kann.

Weiterhin ist vorteilhaft ausgestaltet, daß eine Veränderung des Spülgasflusses oder des Druckes im Messprotokoll zu gegebenenfalls späteren Korrektur festgehalten wird.

Hierdurch kann ein entsprechend zu korrigierender Einfluß durch insbesondere bei optischen Gasanalyseverfahren erreicht werden. Zumindest kann erkannt werden, in welcher Zeitphase die Meßergebnisse gegebenenfalls unzuverlässig sind.

In weiterer vorteilhafter Ausgestaltung ist angegeben, daß bei der Erfassung eines austretenden Gases eine Abschaltung des Gesamtsystems herbeigeführt wird.

In letzter vorteilhafter Ausgestaltung ist vorgesehen, daß auch eine Unterdruckspülung erfolgen kann. Das heißt, hierbei ist der Druck des Spülgases in der zweiten Kammer niedriger als der Druck in der ersten, das Meßgas führenden Kammer. Hierdurch kommt es gleichzeitig zu einer Spülung und entsprechend einer Absaugung.

Die Erfindung ist in der Zeichnung dargestellt und nachfolgend näher beschrieben.

Es zeigt:
Fig. 1: Erfindungsgemäße Ausführung mit Küvette.
Fig. 2: Erfindungsgemäße Ausführungsform mit Sensor.

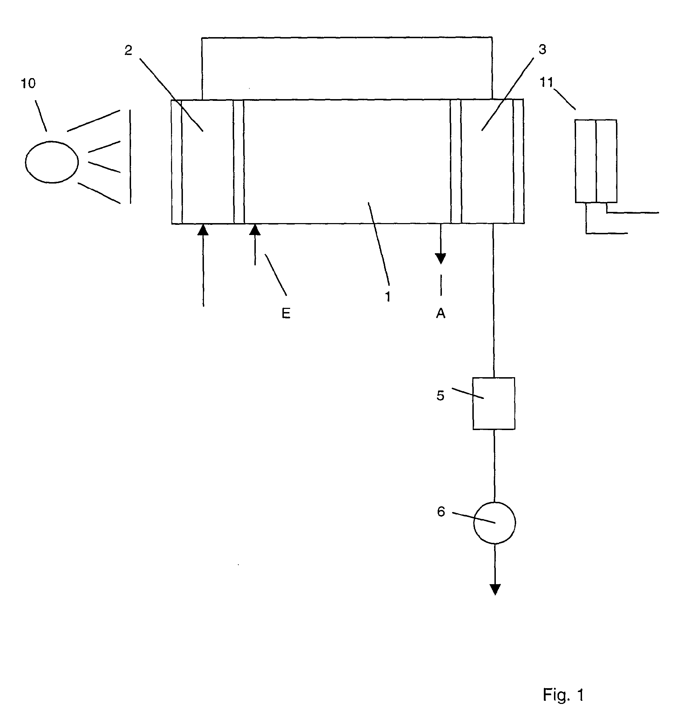

Figur 1 zeigt den Einsatz der vorrichtungsgemäßen Erfindung bei beispielsweise der Absorptionsfotometrie. Hierbei ist das vom Messgas durchspülte System die Meßküvette 1 als solches. Diese besteht aus einem rohrförmigen Element mit einem Messgaseingang E und einem Messgasausgang A. Im Bereich des Einganges E ist das Eintrittsfenster der Strahlung einer Strahlungsquelle 10 und im Bereich des Messgasaustrittes A ist das Ausgangsfenster für die die Küvette passierte Strahlung, die sodann zum Detektor 11 geführt wird. Insgesamt ist die Küvette 1 zumindest in dem Bereich der Fenster jeweils von einer zweiten Kammer 2, 3 umgeben. Da ansonsten die Küvette aus einem Tubus, der geschlossen metallisch ist, besteht, können Leckagen nur an den eingebauten Fenstern auftreten. Somit kann eine Spülkammer lediglich vor dem Eintrittsfenster, und eine Spülkammer vor dem Austrittsfenster vorgesehen sein. Dabei sind die beiden Teilkammern 2, 3 am Eintrittsfenster und am Austrittsfenster mit einer Gasleitung verbunden, so daß die beiden Teilkammern 2, 3 seriell vom Spülgas durchströmt werden können. Es kann jedoch auch zur höheren Absicherung des Systems vorgesehen sein, die gesamte Küvette außen mit einer geschlossenen zweiten Kammer zu versehen, die entsprechend von Spülgas beaufschlagt bzw. durchspült wird. Hierbei führt eine Leckage im Küvettenbereich lediglich zu einem Austritt des kritischen Gases in die Spülkammer. Eine ins Spülsystem eingebaute Spülgasüberwachung 5 mit Sensor 6 überwacht, ob Leckagegas auftritt. Tritt dies auf, so kann die Spülung oder der Spüldurchsatz erhöht werden. Dies gilt insbesondere für den Fall einer Überdruckspülung, in dem der Druck in dem Spülkammerbereich größer als im Küvettenbereich ist. Es kann jedoch auch mit Unterdruck gespült werden, wobei der Spülgasdruck niedriger als der Gasdruck in der Küvette ist. Im zweitgenannten Fall kann die Erfassung eines Leckagegases im Spülsystem zu einem weiteren Durchsatz führen, der auch zu einer Absenkung bzw. zu einer weiteren Absenkung des Druckes im Spülsystem führen kann.

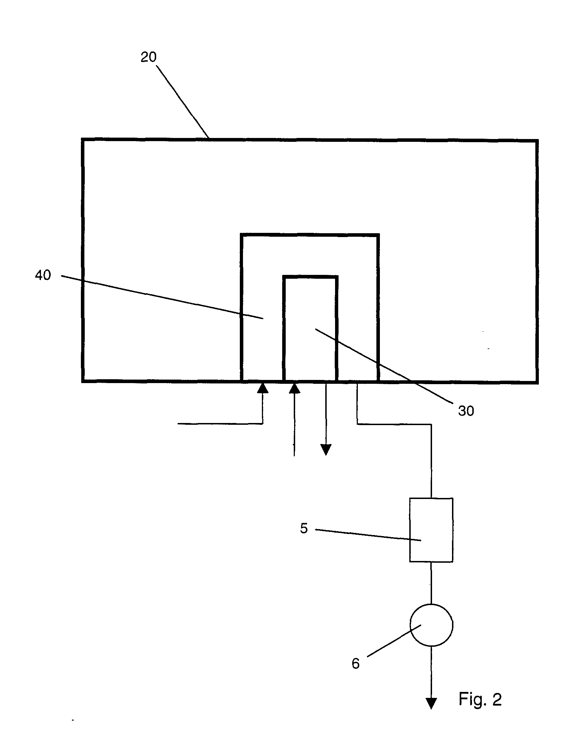

Figur 2 zeigt einen Gasanalysator oder eine Gasanalysatoreinrichtung mit Sensoreinheit sowie Verarbeitungseinheit in einem Gehäuse 20. Für den Fall, daß lediglich brennbares Gas verwendet wird, ist ein nicht zündfähiger (z.B. eigensicherer) Sensor in einer ersten Sensorkammer 30 angeordnet. In diese Sensorkammer 30 wird das toxische oder korrosive oder brennbare Messgas ein- und ausgebracht. Diese besagte Sensorkammer ist in erfindungsgemäßer Weise von einer zweiten Kammer 40 umgeben, die wahlweise gespült werden kann. Diese zweite Kammer 40 ist ein hermetischer Raum zwischen Sensorkammer 30 und dem die Elektronik beinhaltenden Gehäuse 20. So wird der Austritt von korrosiven oder toxischen oder brennbaren Gas zum Analysator hin verhindert. Das Spülgassystem arbeitet in der gleichen Weise, wie im oben genannten Beispiel bereits erwähnt.

Zum Einsatz beider Geräte gemäß Figur 1 und Figur 2 in einem explosionsgefährdeten Bereich kann das System nochmals durch sekundäre Ex-Schutzmassnahmen geschützt werden (z.B. Überdruckkapselung, druckfeste Kapselung).

Insgesamt kann eine Notabschaltung vorgesehen sein, die bei Leckage des Messgases das ganze System abschaltet.

## Patentansprüche

1. Gasanalysatoreinrichtungen mit einer Analyse- oder Sensoreinheit sowie einer elektrisch elektronischen Verarbeitungseinheit,
**dadurch gekennzeichnet,**
**daß** bei der Analyse eines toxischen und/oder korrosiven und/oder brennbaren Gases die Analyse- oder Sensoreinheit (20) als solches nicht zündfähig ausgestaltet und in einer gasdichten Kammer (1, 30) angeordnet ist, um welche eine zweite Kammer (2, 3, 40) angeordnet ist.

2. Gasanalysatoreinrichtung nach dem Prinzip optischer Gasanalyse mit einer entsprechenden vom Messgas durchströmten Messküvette sowie einer Verarbeitungseinheit,
**dadurch gekennzeichnet,**
**dass** bei Analyse eines toxischen und/oder korrosiven und/oder brennbaren Gases die Küvette (1) als solches entweder lediglich im Fensterbereich oder insgesamt von einer weiteren Kammer umgeben ist.

3. Gasanalysator nach Anspruch 1 oder 2,
**dadurch gekennzeichnet,**
**daß** die zweite Kammer (2, 3, 40) bzw. die umgebende Kammer mit inertem Gas oder mit Luft gespült wird.

4. Gasanalysator nach Anspruch 3,
**dadurch gekennzeichnet,**
**dass** in der zweiten Kammer (2, 3, 40) bzw. in der umgebenden Kammer ein gegenüber der ersten Kammer (1, 30) höherer oder niedrigerer Druck eingestellt wird.

5. Gasanalysatoreinrichtung nach einem der vorhergehenden Ansprüche,
**dadurch gekennzeichnet,**
**dass** zur Spülgasdurchflussüberwachung ein Flowsensor (5) eingesetzt wird, und dass dieser Sensor Einrichtungen zur Ausgabe von Grenzwerten besitzt.

6. Gasanalysatoreinrichtung nach einem der vorhergehenden Ansprüche,
**dadurch gekennzeichnet,**
**dass** zur Spülgasüberwachung eine Kombination aus Kapillare und Flowsensor eingesetzt wird, und dass der Flowsensor Einrichtungen zur Ausgabe von Grenzwerten besitzt.

7. Gasanalysatoreinrichtung nach einem der vorhergehenden Ansprüche,
**dadurch gekennzeichnet,**
**dass** die Sensorik der Spülgasüberwachung innerhalb oder außerhalb des Gerätes plaziert werden kann.

8. Gasanalysatoreinrichtung nach einem der vorhergehenden Ansprüche,
**dadurch gekennzeichnet,**
**dass** zur Spülung eine Pumpe eingesetzt wird die gereinigte Umgebungsluft fördert.

9. Gasanalysatoreinrichtung nach einem der vorhergehenden Ansprüche,
**dadurch gekennzeichnet,**
**dass** die Pumpe im Ausgang des Spülkreises im Saugbetrieb und im Eingang eine pneumatische Drossel und in Reihe zur Pumpe ein Flowsensor geschaltet ist.

10. Gasanalysatoreinrichtung nach einem der vorhergehenden Ansprüche,
**dadurch gekennzeichnet,**
**daß** der pneumatische Kreis geschlossen ist.

11. Gasanalysatoreinrichtung nach einem der vorhergehenden Ansprüche,
**dadurch gekennzeichnet,**
**daß** der pneumatische Kreis offen ist.

12. Gasanalysatoreinrichtung nach einem der vorhergehenden Ansprüche,
**dadurch gekennzeichnet,**
**daß** im Ausgang hinter der Pumpe ein Gassensor geschaltet ist, der auf eine Komponente des Messgases sensibel ist um diese im Fehlerfall zu detektieren.

13. Verfahren zum Betrieb einer Gasanalysatoreinrichtung mit einer Analyse- oder Sensoreinheit,
**dadurch gekennzeichnet,**
**dass** bei Analyse eines toxischen und/oder explosiven Gases ein um die Analyse- oder Sensoreinheit oder Meßküvette herum angeordneter Raum von einem Spülgas um- bzw durchströmt wird, wobei im gespülten Raum gegenüber dem Analyseraum ein abweichender Druck eingestellt wird.

14. Verfahren nach Anspruch 13,
**dadurch gekennzeichnet,**
**dass** zum Einsatz der Einrichtung in einer Ex-Umgebung zusätzlich die gesamte Einrichtung nach außen druckfest abgeschlossen ist.

15. Verfahren nach einem der vorhergehenden Ansprüche,
**dadurch gekennzeichnet,**
**dass** der Spülgasfluss geregelt wird, wenn Leckagegas aus dem Messsystem ins Spülgassystem eintritt.

16. Verfahren nach einem der vorhergehenden Ansprüche,
**dadurch gekennzeichnet,**
**dass** der Spülgasdruck bzw. der Spülgasfluss und Änderungen der selben im Messprotokoll in Korrelation zu den zu diesen Zeitpunkten aufgenommenen Meßdaten korreliert aufgenommen bzw. abgespeichert wird.

17. Verfahren nach einem der vorhergehenden Ansprüche,
**dadurch gekennzeichnet,**
**dass** bei Erfassung eines Leckagegases im Spülgassystem das Messgas notabgeschaltet wird.
